# EUROPÄISCHE PATENTSCHRIFT

(11) **EP 3 953 121 B1**
(45) Veröffentlichungstag und Bekanntmachung des Hinweises auf die Patenterteilung: **24.07.2024**
(21) Anmeldenummer: 20721158.2
(22) Anmeldetag: 07.04.2020
(51) Int. Cl.: B28B 5/04, B28B 15/00, B28B 17/00, B25J 5/04, B28B 7/00, E21D 11/08, B25J 11/00

(54) **SCHALUNG ZUR HERSTELLUNG EINES BETONTÜBBINGS EINES TUNNELAUSBAUSYSTEMS**
FORMWORK FOR PRODUCING CONCRETE TUBBING IN A TUNNEL LINING SYSTEM
COFFRAGE SERVANT À LA FABRICATION D'UN SEGMENT DE CUVELAGE EN BÉTON D'UN SYSTÈME D'AMÉNAGEMENT POUR TUNNEL

(30) Priorität: 07.04.2019 DE 102019109084
(43) Veröffentlichungstag der Anmeldung: 16.02.2022
(73) Patentinhaber: Herrenknecht AG, 77963 Schwanau (DE)
(72) Erfinder: MEDEL, Stefan, 77723 Gengenbach (DE)
(74) Vertreter: Klickow & Wetzel PartGmbB
(86) Internationale Anmeldenummer: PCT/EP2020/059870
(87) Internationale Veröffentlichungsnummer: WO 2020/208006

(56) Entgegenhaltungen:
- EP-A2- 2 014 429
- CN-A- 103 726 857
- CN-U- 206 158 755
- JP-A- 2001 047 421
- JP-A- H04 189 506
- JP-A- S5 263 216
- JP-U- S5 518 053

## Beschreibung

Die Erfindung betrifft eine Schalung zur Herstellung eines Betontübbings eines Tunnelausbausystems nach dem Oberbegriff des Anspruchs 1.

Zur Betontübbingproduktion werden die einzelnen Arbeitsschritte zur Herstellung eines Betontübbings manuell durchgeführt. Neben den dabei anfallenden Arbeitskosten ist die auszuführende Arbeit monoton und für die Mitarbeiter anstrengend. Weiterhin werden die Tätigkeiten mit schweren Gegenständen durchgeführt, sodass Verletzungsgefahr gegeben ist. Trotz der wiederkehrenden Tätigkeiten ist es gleichzeitig notwendig, die Arbeiten mit sehr hoher Präzision durchzuführen.

Dieses betrifft insbesondere den Einsatz der Schalungen. Diese müssen an verschiedenen Arbeitsstationen der Produktionsline teilweise oder vollständig geöffnet oder geschlossen werden. Dieses erfolgt dabei manuell und ist daher arbeits- und zeitintensiv. Weiterhin muss erhebliche Sorgfalt insbesondere beim Schließen aufgewendet werden, damit die Schalungen dicht sind und der eingebrachte Beton beim Betonieren nicht ausläuft.

JP 2001 047421 A offenbart eine Schalung zur Herstellung eines Betontübbings eines Tunnelausbausystems nach dem Oberbegriff des Anspruchs 1.

Aufgabe der Erfindung ist daher, zumindest Teilaspekte der zuvor genannten Probleme zu reduzieren.

Die Aufgabe wird durch eine Schalung nach Anspruch 1 gelöst.

Hierdurch wird es auf einfache Weise möglich, das Öffnen und Schließen zu vereinfachen und gleichzeitig auf einfache Weise das Halten sicherzustellen, so dass die Schalung sicher geschlossen bleibt.

Eine weitere Lehre der Erfindung sieht vor, dass sich wenigstens zwei Wände an einem ihrer beiden äußeren Endbereiche mit ihren kurzen Seiten in geschlossener Position berühren und dabei eine Ecke der Betonwanne ausformen. Dabei ist vorteilhaft, dass an einer der zwei Wände im äußeren Endbereich ein männliches Eingriffelement und an der anderen Wand im äußeren Endbereich ein weibliches Eingriffelement vorgesehen ist, die in geschlossener Position der zwei Wände ineinandergreifen. Hierdurch kann auf einfache Weise der Schluss der Ecke sichergestellt werden.

Dabei ist weiterhin vorteilhaft, dass die zwei Wände in ihren äußeren Endbereichen miteinander mittels wenigstens einer Schraubverbindung oder einer Klemmverbindung miteinander verbunden werden, wobei die Schraubverbindung oder Klemmverbindung bevorzugt zur Positionssicherung dient, und/oder wobei die Schraubverbindung eine Schraube mit einem entlang wenigstens eines Teils der Schraube angeordneten Federelement aufweist. Dieses stellt insbesondere eine einfache Zusatzsicherung dar, bei der auf einfache Weise die Positionierung gewährleistet bleibt.

Eine weitere Lehre der Erfindung sieht vor, dass die Klemmverbindung ein Arretierungselement aufweist, das an einem der Wandelemente angeordnet ist und verschwenkbar zwischen einer offenen und einer geschlossenen Position mit wenigstens einem Aktuator, beispielsweise einem Hydraulikzylinder oder einem Spindelsystem, bewegbar ist. Dabei ist vorteilhaft, dass der Aktuator mit dem nachfolgend beschriebenen Antriebssystem verbunden ist. Hierdurch kann auf einfache Weise eine Sicherung bereitgestellt werden.

Eine weitere Lehre der Erfindung sieht vor, dass die wenigstens eine Wand zum Bewegen zwischen der offenen und der geschlossenen Position mit wenigstens zwei Aktuatoren des Antriebssystems verbunden ist. Hierdurch lässt sich auf einfache Weise die notwendigen Haltekräfte aufbringen und verteilen.

Eine weitere Lehre der Erfindung sieht vor, dass das wenigstens eine Wandelement zwei äußere Endbereiche aufweist, und dass pro Endbereich zum Bewegen und Halten des Wandelements wenigstens ein Aktuator vorgesehen ist. Es hat sich gezeigt, dass hierdurch auf besonders einfache Weise ein dichter Verschluss auch bei Befüllung der Schalung mit Beton und evtl. Verformung der Seitenwände hierdurch gewährleistet werden kann.

Eine weitere Lehre der Erfindung sieht vor, dass das Antriebssystem an einer Arbeitsstation mit einem externen Antrieb zum Antreiben des Antriebssystems verbindbar ist. Hierdurch kann der Aufbau der Schalung möglichst einfach ausfallen, da auf einen Antrieb in der Schalung verzichtet werden kann.

Gemäß der Erfindung handelt es sich bei dem Antriebssystem um ein Hydrauliksystem mit wenigstens einem Hydraulikkreislauf, wobei das Antriebssystem wenigstens einen Hydraulikzylinder als Aktuator aufweist, der mit dem Hydraulikkreislauf verbunden ist. Hierdurch kann auf einfache Weise sowohl das Bewegen als auch das Halten mit hinreichenden Kräften bereitgestellt werden.

Dabei ist vorteilhaft, dass der Hydraulikkreislauf ein Sperrelement zum Halten des Drucks im Hydraulikkreislauf aufweist, wobei es sich bevorzugt um ein Lastaufnahmeventil handelt. Dabei ist weiterhin vorteilhaft, dass der Hydraulikkreislauf ein Element zum Ausgleich einer Druckänderung und/oder einer Volumenänderung im Hydraulikkreislauf aufweist, wobei es sich bevorzugt um einen Blindzylinder oder um einen Membranspeicher handelt. Dabei ist weiterhin vorteilhaft, dass der Hydraulikkreislauf wenigstens ein Anschlusselement zum lösbaren Anschließen des Hydraulikkreislaufs an ein Hydraulikaggregat als externen Antrieb des Antriebssystems an einer Arbeitsstation aufweist. Weiterhin ist vorteilhaft vorgesehen, dass die einzelnen Hydraulikzylinder mittels Druckfolgeventile verbunden sind.

Dadurch kann auf einfache Weise eine Ablaufsteuerung der einzelnen Schritte des Öffnens und/ioder Schließens der Schalung erreicht werden. Durch wenigstens eines der zuvor genannten Elemente lässt sichein erfindungsgemäßer Hydraulikkreislauf auf einfache Weise bereitstellen.

Ein weiterer nicht beanspruchter Aspekt sieht vor, dass es sich bei dem Antriebssystem um einen mechanischen Antrieb als Aktuator, bevorzugt um einen Spindelantrieb, handelt. Dabei ist vorteilhaft, dass der mechanische Antrieb selbsthemmend ausgelegt ist oder mit einem Sperrelement versehen ist. Dabei ist weiterhin vorteilhaft, dass der mechanische Antrieb ein Verbindungselement zum lösbaren Verbinden mit einem externen Rotationsantrieb, beispielsweise einem Drehmomentenschrauber, als externen Antrieb des Antriebssystems an einer Arbeitsstation aufweist.

Gemäß der Erfindung ist wenigstens ein Deckelelement schwenkbar an der Schalung vorgesehen, der auf der Oberseite der Betonwanne anordbar ist und auf dieser die Oberseite wenigstens teilweise überdeckt. Das Deckelelement ist mit wenigstens einem Aktuator, der ein Hydraulikzylinder ist, zwischen einer offenen und einer geschlossenen Position verschwenkbar, der das Deckelement bevorzugt in der jeweiligen Position hält. Dabei ist weiterhin vorteilhaft, dass der Aktuator mit dem zuvor beschriebenen Antriebssystem verbunden ist.

Eine weitere Lehre der Erfindung sieht vor, dass das Deckelelement ein Arretierungselement aufweist, das das Deckelelement in geschlossener Position gegenüber der Schalung arretiert.

Nachfolgend wird die Erfindung anhand von Ausführungsbeispielen in Verbindung mit einer Zeichnung näher erläutert. Dabei zeigen:
- Figur 1: eine Draufsicht auf eine Produktionsanlage
- Figur 2: eine räumliche Ansicht zu Figur 1,
- Figur 3: eine Seitenansicht zu Figur 1,
- Figur 4: eine weitere räumliche Ansicht zu Figur 1,
- Figur 5: eine räumliche Ausschnittsvergrößerung zu Figur 3,
- Figur 6: eine räumliche Ausschnittsansicht zu Figur 5,
- Figur 7: eine räumliche Ansicht einer ersten Ausführungsform einer nicht beanspruchtenSchalung,
- Figur 8: eine vergrößerte Ausschnittsansicht zu Figur 7,
- Figur 9: eine räumliche Ansicht einer geöffneten ersten Ausführungsform der Schalung,
- Figur 10: eine Schnittansicht durch ein Befestigungselement zu Figur 7,
- Figur 11: eine räumliche Ansicht einer zweiten Ausführungsform einer erfindungsgemäßen Schalung in geschlossenem Zustand,
- Figur 11a: eine vergrößerte Ausschnittsansicht zu Figur 11,
- Figur 12: eine Unteransicht zu Figur 11,
- Figur 12a: eine vergrößerte Ausschnittsansicht zu Figur 12,
- Figur 12b: eine weitere vergrößerte Ausschnittsansicht zu Figur 12,
- Figur 13: eine räumliche Ansicht einer zweiten Ausführungsform einer erfindungsgemäßen Schalung in geöffnetem Zustand,
- Figur 13a: eine vergrößerte Ausschnittsansicht zu Figur 13,
- Figur 13b: eine weitere vergrößerte Ausschnittsansicht zu Figur 13,
- Figur 14: eine räumliche Seitenansicht auf die Seitenwand der erfindungsgemäßen Schalung zu den Figuren 11 und 13, und
- Figur 15: eine räumliche Seitenansicht auf die Stirnwand der erfindungsgemäßen Schalung.

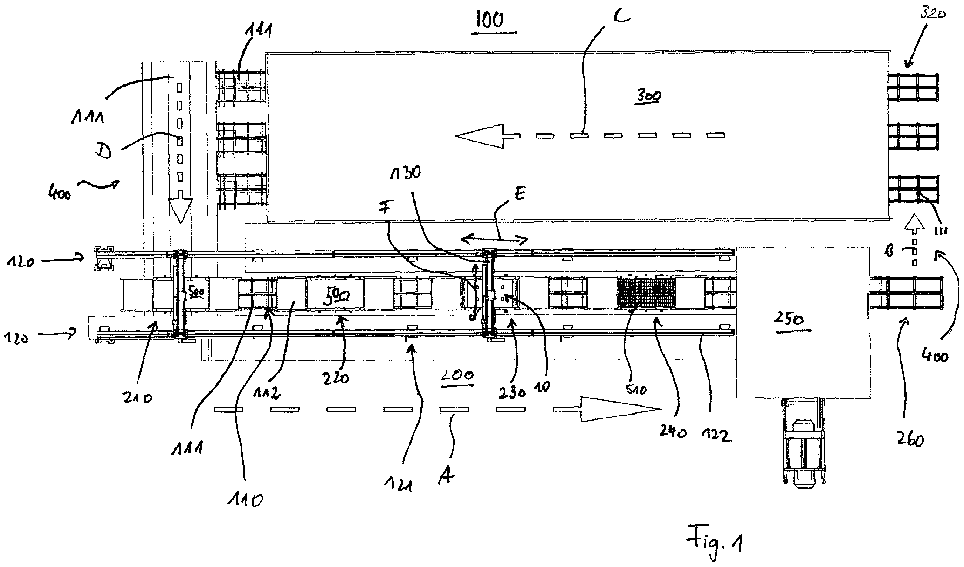

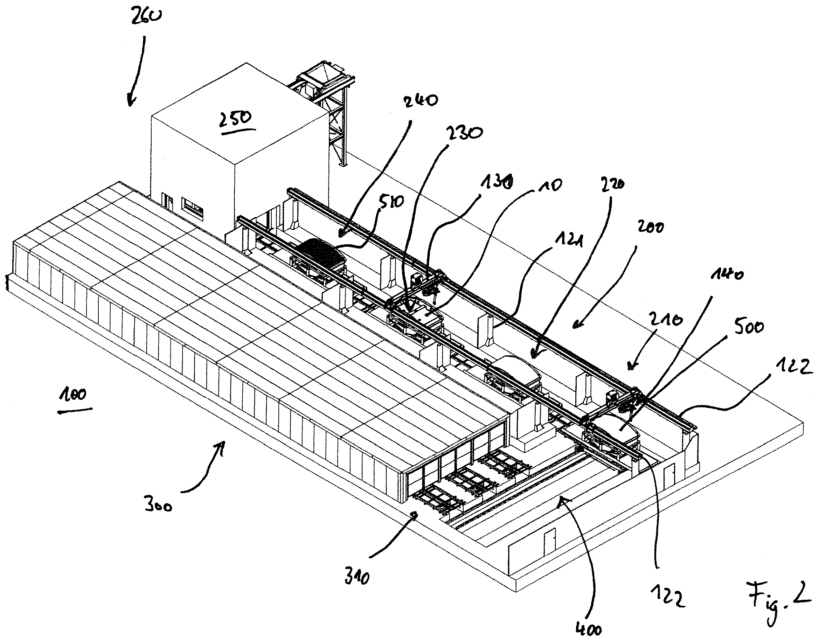

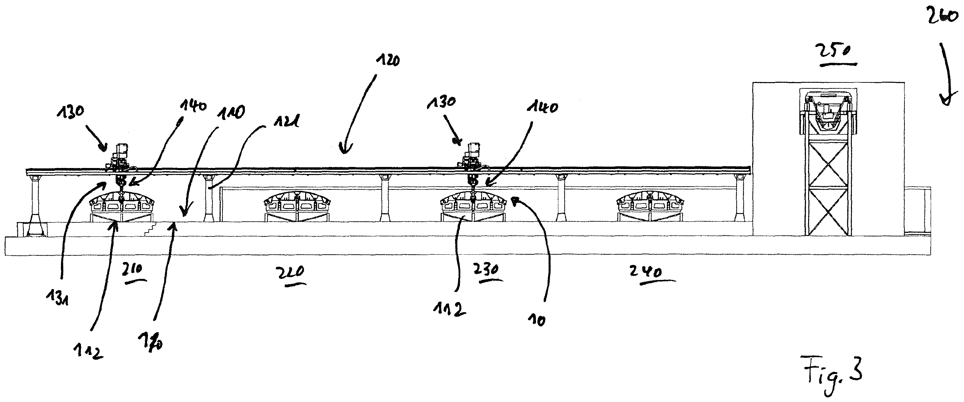

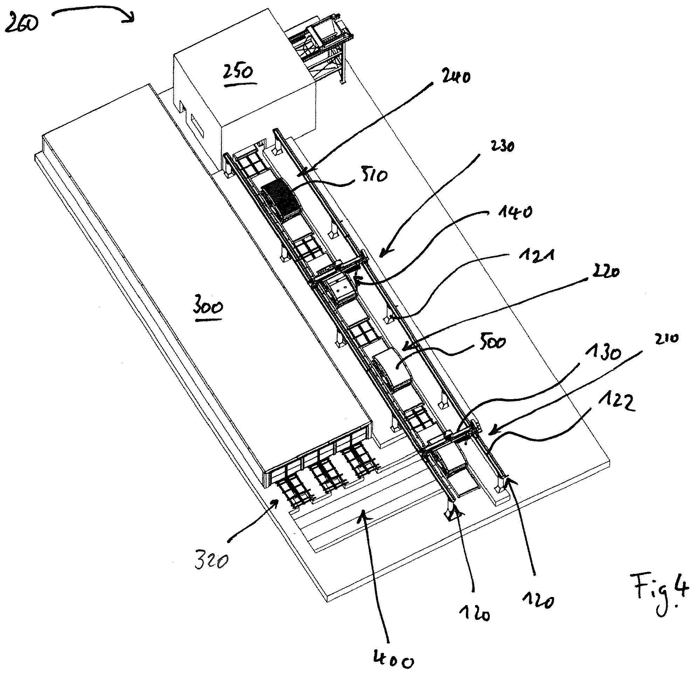

Figur 1 bis 4 zeigen eine Produktionsanlage 100 für Betontübbinge 500 bei der eine erfindungsgemäße Schalung 10 zu Anwendung kommt. Die Produktionsanlage 100 ist dabei beispielsweise als Umlaufanlage für die Schalungen 10 ausgeführt. Alternativ kann die erfindungsgemäße Schalung auch bei einer Standanlage (nicht dargestellt) zum Einsatz kommen, bei der die Schalungen für die Herstellungsschritte vor dem Einbringen in eine Härteanlage zum beschleunigten Ersthärten des Betontübbings 500, sofern dieses Härten notwendig ist, erfolgen, an einem Ort verbleiben.

Die hier beispielhaft gezeigte Umlaufanlage besteht aus mindestens einer Produktionslinie 200 und einem Härtetunnel 300. Der Härtetunnel 300 weist dabei beispielsweise mindestens eine Härtelinie 310, in Figur 1 dargestellt drei Härtelinie 310, auf. Die Produktionslinie 200 und der Härtetunnel 300 bzw. dessen Härtelinien 310 sind mit einem Querförderer 400 verbunden.

Die Produktionsanlage 100 weist beispielsweise einen Transportweg 110 auf. Der Transportweg 110 weist beispielsweise eine Fahrbahn 111 auf, auf der die Schalung 10 verfahrbar ist. Dafür weist die Schalung entweder ein eigenes Transportmittel beispielsweise in Form von Rädern auf, oder die Schalung 10 ist auf einem separaten Transportmittel 112 angeordnet. Die Schalung 10/die Transportmittel 112 bewegen sich entlang des Transportwegs 110 in Pfeilrichtung A durch die Produktionslinie 200, beispielsweise über ein Antreiben der Räder oder über einen nicht dargestellten Mitnehmer.

Nach Durchlaufen der Produktionslinie 200 werden die Schalungen 10 von einem Querförderer 400 in Pfeilrichtung B den Härtelinien 310 des Härtetunnels 300 zugeführt. Auch der Querförderer 400 weist eine Fahrbahn 111 auf, auf der die Schalung 10/die Transportmittel 112 bewegt werden, beispielsweise über ein Antreiben der Räder oder über einen nicht dargestellten Mitnehmer. Gleiches gilt auch für die Härtelinien 310 des Härtetunnels 300.

Nach Durchlaufen des Härtetunnels 300 in Pfeilrichtung C werden die Transportmittel 112 mittels des Querförderer 400 in Pfeilrichtung D der Produktionslinie 200 wieder zugeführt. Der Umlauf ist dann abgeschlossen.

In Pfeilrichtung A, in Figur 1 von links nach rechts gesehen, weist die Produktionslinie 200 hier beispielhaft sechs Arbeitsstationen 210 - 260 auf.

An der ersten Arbeitsstation 210 wird die Schalung 10 wie nachfolgend erläutert, geöffnet.

An der zweiten Arbeitsstation 220 wird der fertige Tübbing 500 mittels eines Hebeelements (nicht dargestellt) aus der Schalung 10 entnommen. Dieses kann alternativ auch bereits an der ersten Arbeitsstation 210 erfolgen und die Arbeitsstation 220 kann dann entfallen.

An der dritten Arbeitsstation 230 wird die bevorzugt geöffnete Schalung 10 gereinigt und für die Aufnahme von Einbauelemente sowie die Betonierung vorbereitet. Hierzu wird beispielsweise ein Trennmittel (Schalungsöl) auf alle Flächen und Teile der Schalung aufgebracht, die in den Kontakt mit dem Beton des herzustellenden Tübbings 500 kommen und nicht Bestandteil des Tübbings 500 werden sollen.

An der vierten Arbeitsstation 240 wird die Schalung 10 mit den Einbauteilen bestückt, die Bestandteil des fertigen Tübbings 500 sind. Hierbei handelt es sich beispielsweise um eine Bewehrung 510, Elektrodübel (nicht dargestellt), einen Schutzliner oder dergleichen.

Nach Einbringen der Einbauteile, die alternativ auch vollständig oder teilweise an der dritten Arbeitsstation 230 nach Abschluss der Reinigung und der Vorbereitung in die Schalung 10 eingebracht werden können, wird die Schalung 10 mit den eingebrachten Komponenten kontrolliert, um zu gewährleisten, dass die Schalung 10 korrekt zusammengebaut ist und die Einbauteile des Tübbings 500 korrekt angeordnet sind.

Das Bestücken der Schalung 10 mit den Einbauteilen kann auch aufgeteilt in den Arbeitsstationen 230, 240 erfolgen.

In der fünften Arbeitsstation 250 werden, soweit nicht vorher bereits geschehen und nach einem nicht beanspruchten Aspekt, die evtl.

vorgesehenen Deckel (nicht dargestellt) der Schalung montiert. Alternativ und gemäß der Erfindung sind die Deckel beweglich an der Schalung 10 angeordnet und werden vor dem Eintritt in die fünfte Arbeitsstation 250 oder in der fünften Arbeitsstation 250 geschlossen.

Diese schließen wird nachfolgend erläutert. Der in die Schalung 10 einzubringende Beton nach notwendiger Mixtur vorbereitet und in notwendiger Menge und in die Schalung 10 in der fünften Arbeitsstation 250 eingebracht. Anschließend wird der eingebrachte Beton in bekannter Weise beispielsweise durch Rütteln verdichtet. Alternativ erfolgt das Einbringen und Verdichten in mehreren Schritten.

Vor oder in der sechsten Arbeitsstation 260 wird der Deckel bzw. werden die Deckel der Schalung 10 entfernt/geöffnet und die Betonoberfläche 520 des Tübbings wird behandelt, beispielsweise geglättet. Nach dem Behandeln/Glätten werden die Deckel der Schalung 10 wieder geschlossen, wie nachfolgend beschrieben wird.

Die Produktionslinie 200 wird dann nach der sechsten Arbeitsstation 260 in diesem Beispiel verlassen, in dem die Schalung 10/das Transportmittel 112 mit der Schalung 10 und dem in der Schalung 10 vollständig hergestellten rohen Tübbing 500 an den Querförderer 400 übergeben wird.

Die Anzahl der Arbeitsstationen ist hier nur beispielhaft zu sehen. Es ist einem Fachmann ohne weiteres möglich, die Anzahl der Arbeitsstationen durch Zusammenfassen oder Entkoppeln von einzelnen Arbeitsschritten entsprechend den Notwendigkeiten anzupassen.

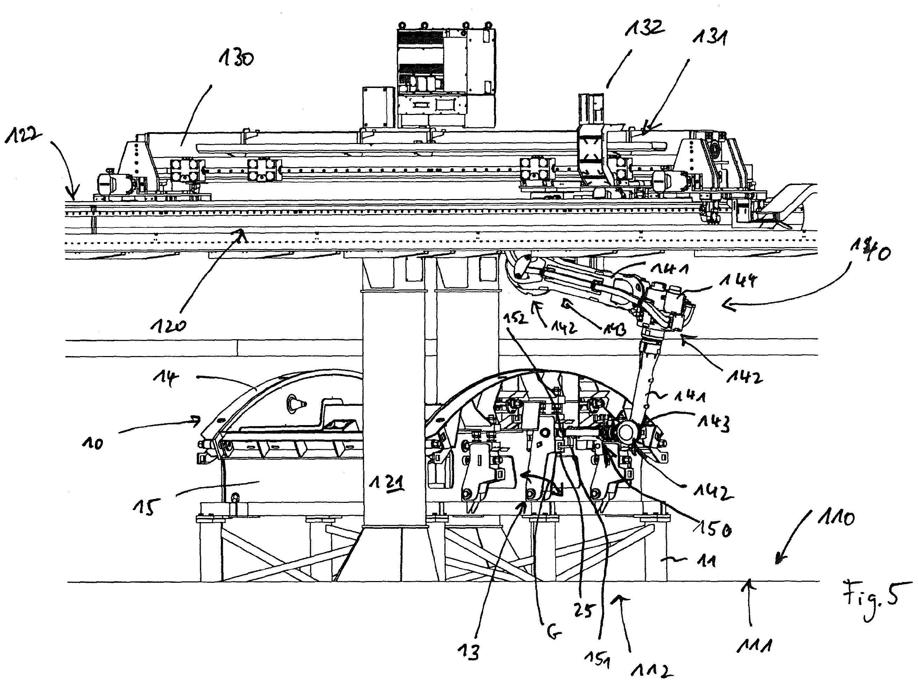

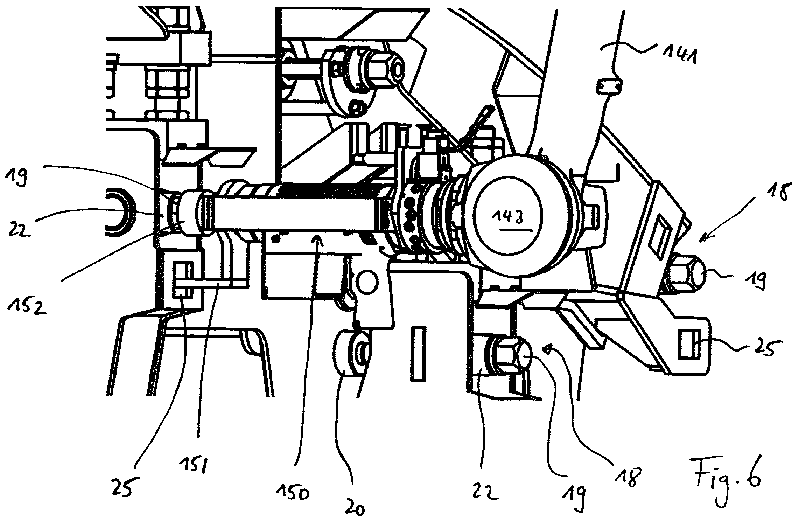

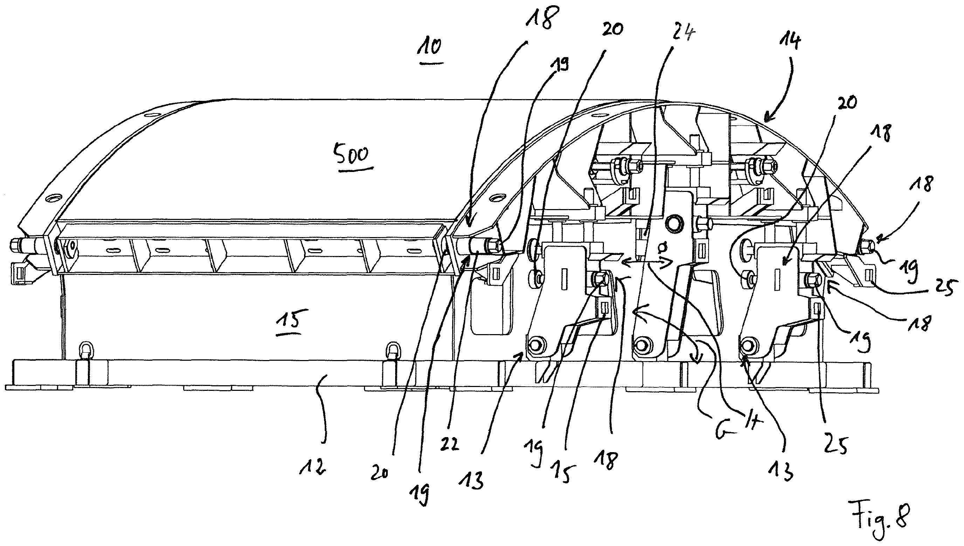

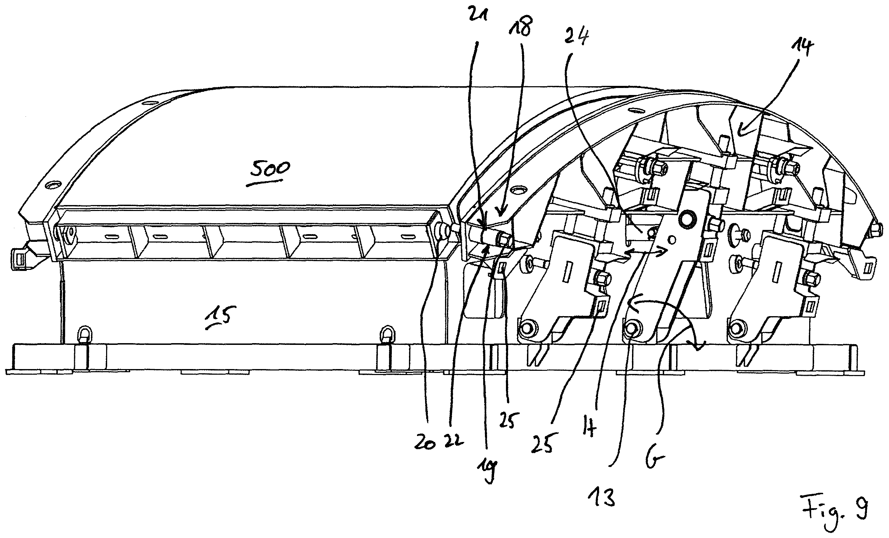

Eine erste nicht beanspruchte Ausführungsform der Schalung 10 (siehe Fig. 5 bis 10) ist beispielsweise über einen Sockel 11 des Transportmittels 112 angeordnet. Die Schalung selbst weist eine Basis 12 auf, mit der sie auf dem Sockel 11 anordbar ist. Über der Basis ist ein Innenraum 17 als eine Betonwanne vorgesehen, der aus einem Boden 16 und Innenwänden der Stirnwände 15 und Seitenwände 14 gebildet ist. In diese Betonwanne bzw. in diesen Innenraum 17 werden die Einbauteile und der Beton eingebracht.

Über Schwenkverbindungen 13 ist die Basis 12 in dieser Ausführungsform nicht beschränkend mit zwei Seitenwänden 14 der Schalung 10 verschwenkbar verbunden. Weiterhin weist die Schalung 10 zwei Stirnwände 15 auf. In den in den Figuren 5 bis 10 gezeigten Schalungen 10 sind die Stirnwände 15 fest mit der Basis 12 verbunden. Es ist hier genauso möglich, dass auch die Stirnwände 15 über Gelenksverbindungen mit der Basis 12 fest schwenkbar verbunden sind.

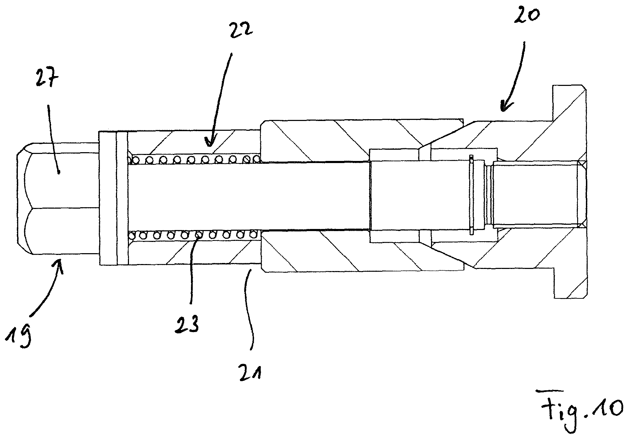

In der in den Figuren 5 bis 10 gezeigten nicht beanspruchten Ausführungsform werden die Seitenwände 14 über Schraubverbindungen mit der Basis 12 und den Stirnwänden 15 haltend verbunden. Eine solche Schraubverbindung ist geschnitten in Figur 10 dargestellt. Sie weist eine Schraube 19 auf, die in ein Gewindeelement 20, die an der Basis 12 oder beispielsweise an der Stirnwand 15 angeordnet ist, eingeschraubt wird. Die Schraube 19 ist eingesteckt in eine beispielsweise an der Seitenwand 14 über einer durchgängigen Öffnung (nicht dargestellt) angebrachten Hülse 21. Die Hülse 21 weist dabei einen Federabschnitt 22 auf, in dem eine Feder 23 vorgesehen ist.

Sind das Gewindeelement 20 und die Hülse 21 fluchtend übereinander angeordnet, wenn beispielsweise die Seitenwand 14 gegen die Stirnwand 15 und die Basis 12 angeordnet ist, kann die Schraube 19 in das Gewindeelement 20 eingeschraubt werden und damit die Seitenwand 14 gegen die Basis 12 und /oder die Stirnwand 15 arretieren.

Dafür ist ein Antriebssystem vorgesehen, dass das Bewegen der Seitenwände 14 gegen die Basis 12 und/oder die Stirnwände 15 alternativ auch den Boden 16 ermöglicht. Beispielsweise kann es sich hierbei um ein Spindelsystem als mechanischen Antrieb handeln, dass, wenn es angetrieben wird, die Seitenwände 14 um die Schwenkverbindung 13 in Doppelpfeilrichtung G entweder von der Basis 12 und den Stirnwänden 15 und dem Boden 16 weg oder zu diesen hinbewegt werden. Alternativ und gemäß der Erfindung wird ein hydraulisches Antriebssystem eingesetzt, wie es in einem zweiten erfindungsgemäßen Ausführungsbeispiel erläutert wird.

Wird ein mechanisches Antriebssystem verwendet, so kann es so ausgelegt werden, dass es selbsthemmend ist, so dass keine Schraubverbindungen notwendig sind, um die Seitenwände 14 gegen den Boden 16 und die Seitenwände 15 zu halten. Alternativ oder zusätzlich kann auch ein Sperrelement (nicht dargestellt) verwendet werden, um ein Halten zu gewährleisten, indem eine Rückbewegung des Spindelantriebs verhindert wird.

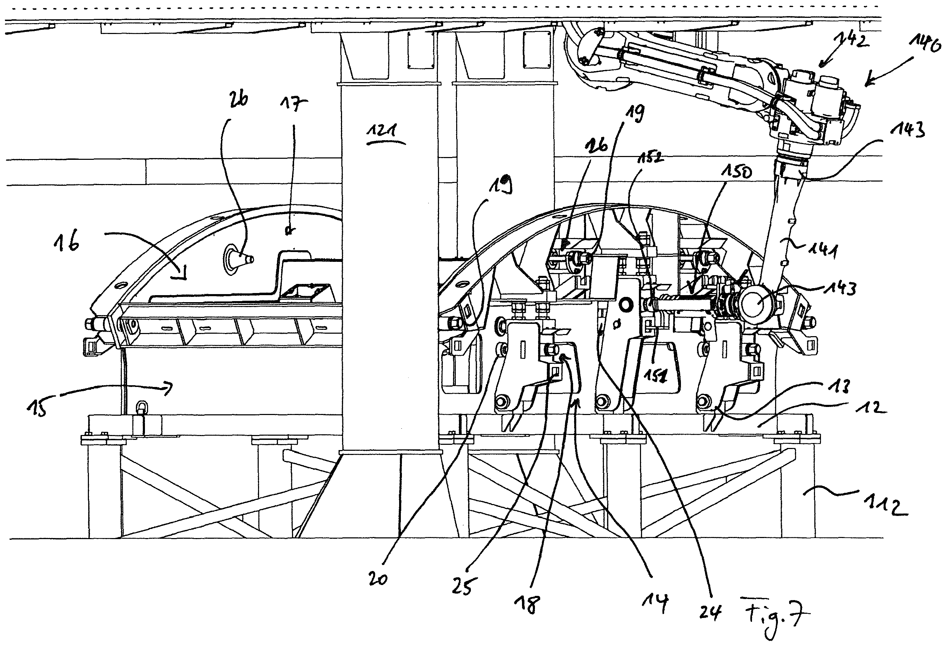

In einer bevorzugten Ausführungsform lässt sich die Zentralspindel auch mit einem geeigneten Werkzeug, vorzugsweise dem gleichen Werkzeug, mit dem die Schrauben 19 gelöst und festgezogen werden, antreiben. In den Figuren 7, 8 und 9 ist ein Stabelement 24 gezeigt, dass von der Zentralspindel in Doppelpfeilrichtung H bewegbar ist.

Das Einschrauben der Schraube 19 in das Gewindeelement 20 erfolgt gegen das Federelement 23, bzw. beim Ausschrauben drückt das Federelement 23 die Schraube 19 nach außen, sodass sich diese leichter beim Ausschrauben aus dem Gewindeelement 20 heraus bewegt.

Hierdurch ist es auf einfache Weise möglich, dass beim Einsatz eines Drehmomentschraubers als Werkzeug 150 am Roboter 140 dieser die Schraube 19 aus dem Gewindeelement 20 herausschrauben kann, sodass sich diese sicher löst, ohne dass der Drehmomentschrauber eine Zugkraft auf die Schraube 19 ausüben muss.

Weiterhin weist die Schalung 10 im Bereich der Schrauben 19 Eingriffsöffnungen 25 auf, in die ein Drehmomentabtragelement 151 eingreift, um das Werkzeug 150 entsteht bzw. den Roboter 140 zu entlasten, die sonst das Drehmoment entsprechend abtragen müssten.

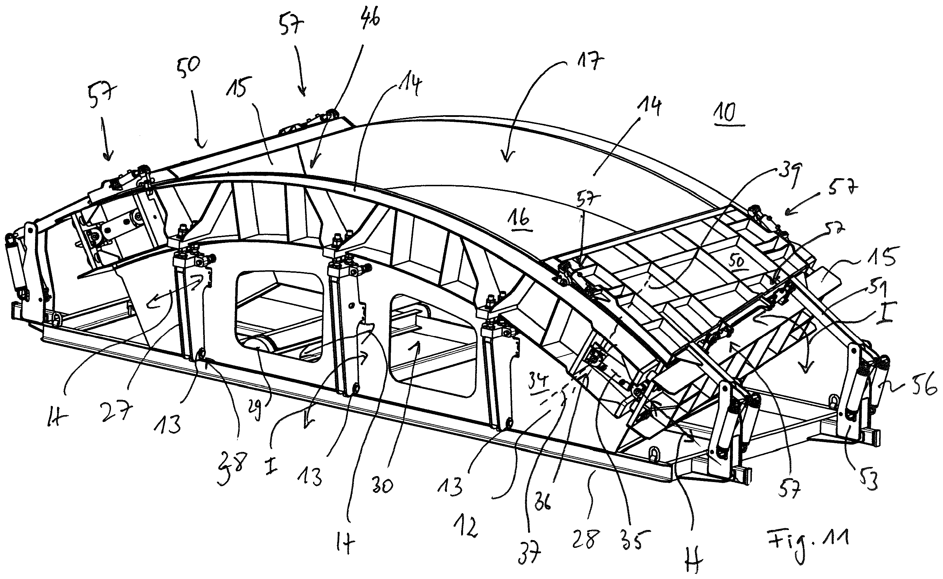

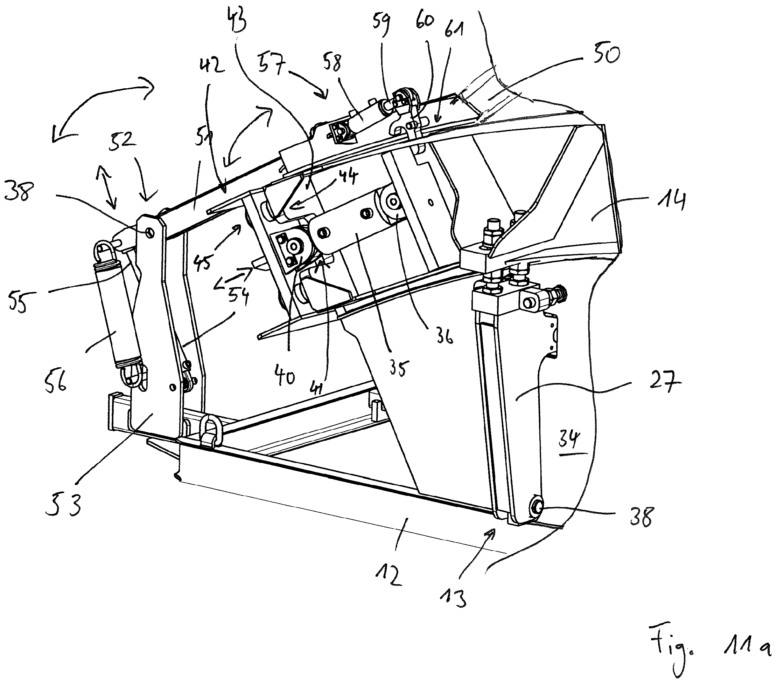

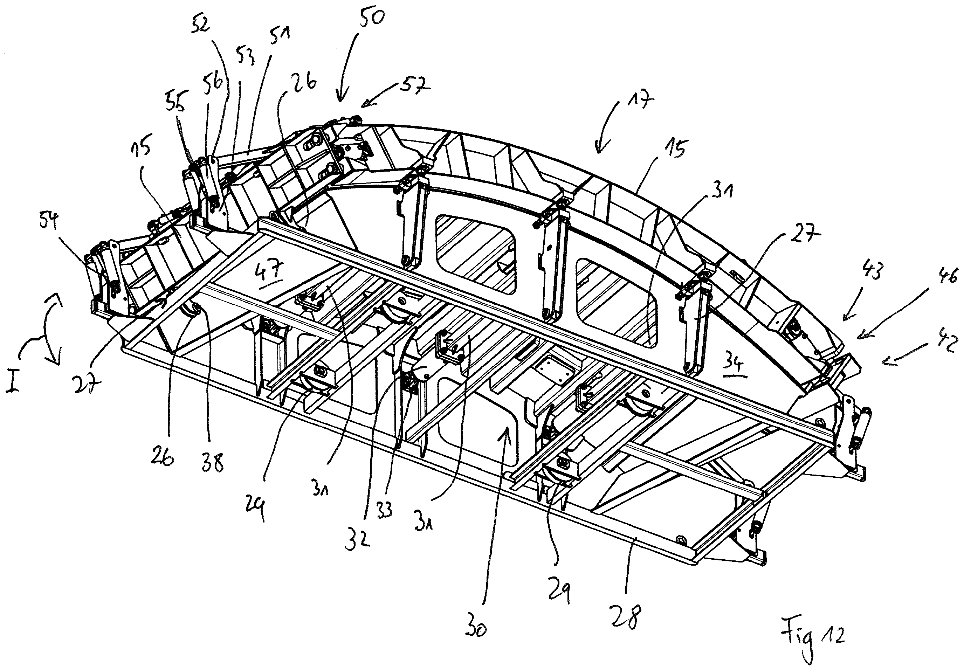

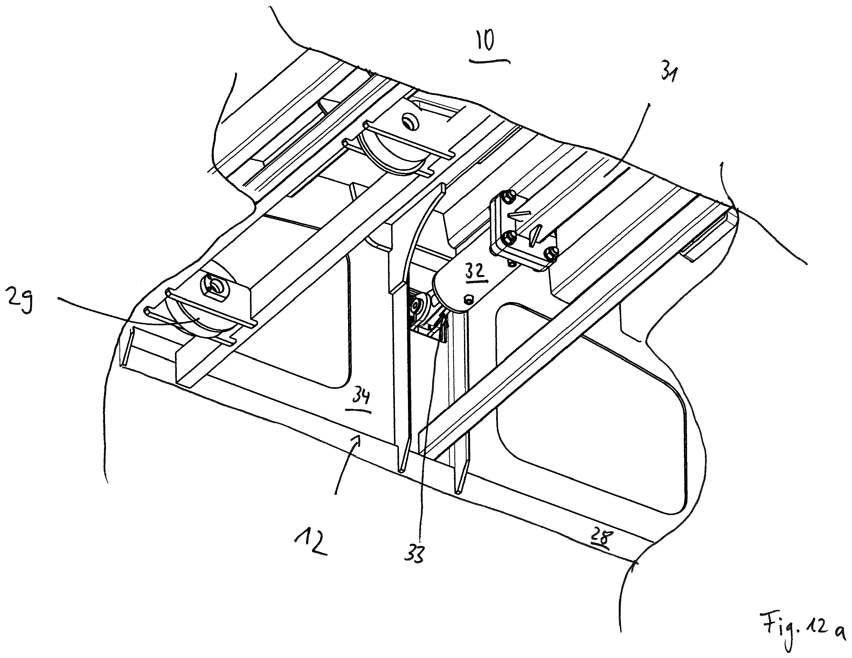

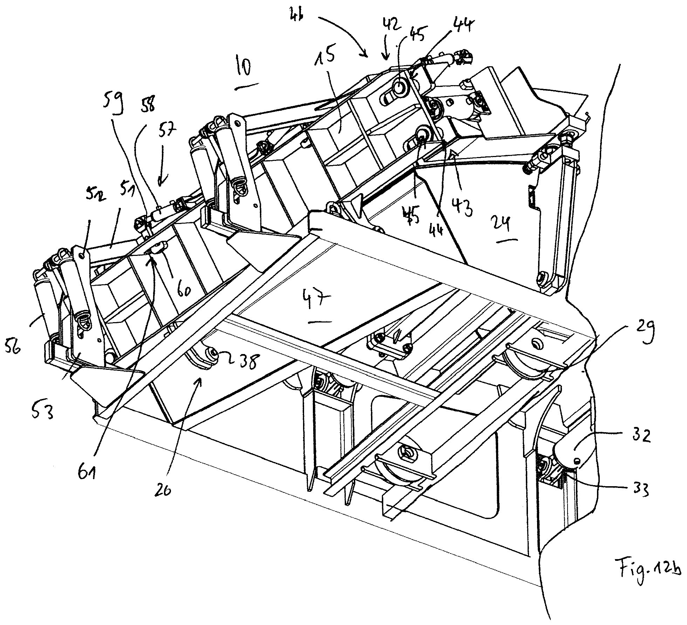

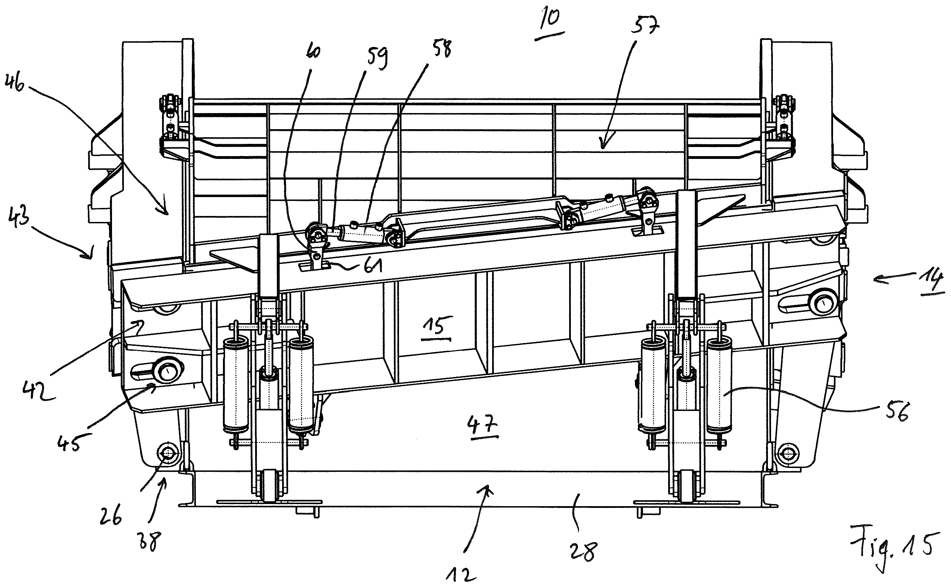

Eine zweite erfindungsgemäße Ausführungsform der Schalung 10 ist in den Fig. 11 bis 15 dargestellt.

Die Schalung 10 weist einen Innenraum 17 zur Aufnahme von Bewehrung, Einbauteilen und Beton zur Herstellung des Betontübbings 500 auf. Dieser wird gebildet durch einen Boden 16 sowie die Innenseiten der Seitenwände 14 und der Stirnwände 15. Der Boden 16 ist dabei auf einer Basis 12 angeordnet.

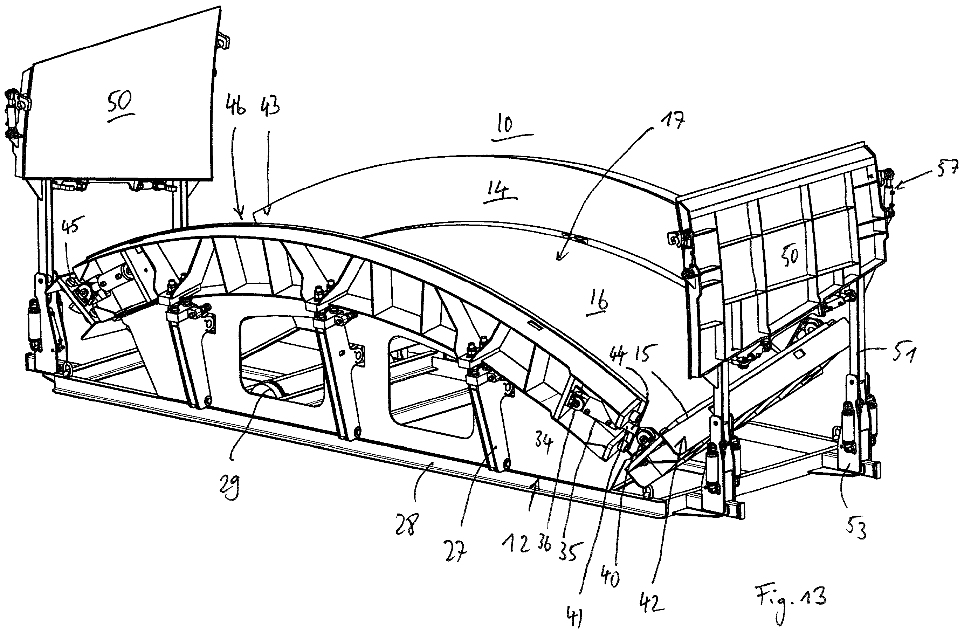

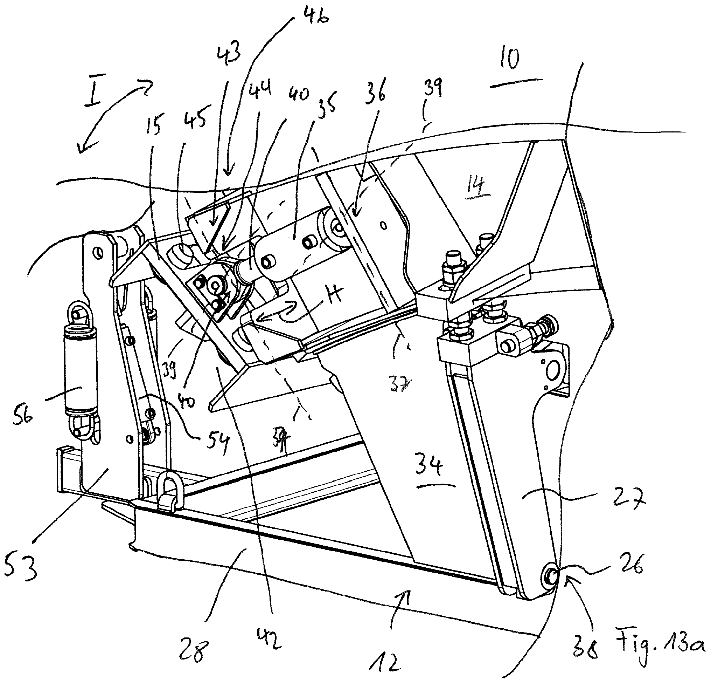

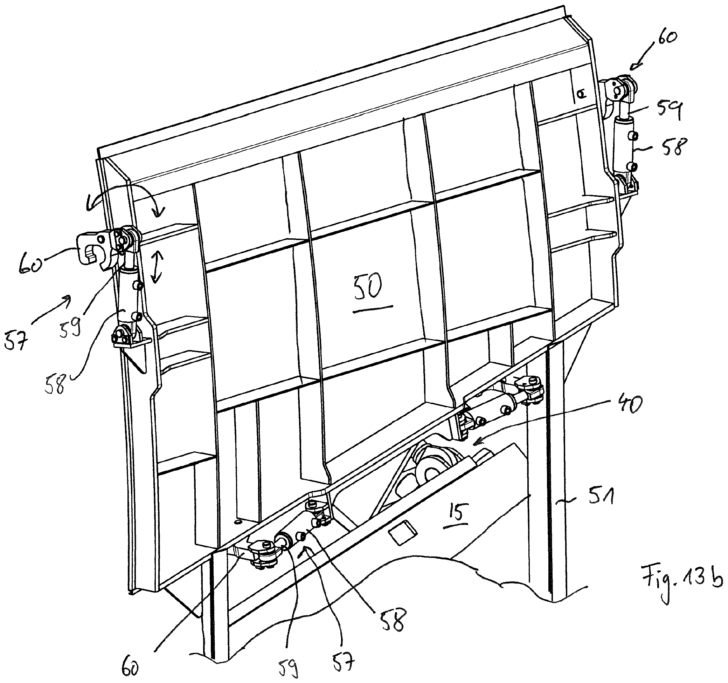

Die Seitenwände 14 und die Stirnwände 15 sind fest an der Basis über eine Schwenkverbindung 13, 26 schwenkbar angeordnet. Die Schwenkverbindung 13, 26 ist jeweils über ein Verbindungselement 27 mit der Seitenwand 14 bzw. mit der Stirnwand 15 verbunden. Über die Verbindungselemente 27 werden die Seitenwände 14, Stirnwände 15 um einen Drehpunkt 28 verschwenkt, sodass sich die Seitenwände 14, Stirnwände 15 vom Boden 16 lösen und nach außen verschwenkt werden, wie dieses in Figur 13 gezeigt ist. Das Verschwenken erfolgt in Doppelpfeilrichtung I.

Die Basis 12 weist einen unteren Rahmen 28 auf, an dem unter anderem beispielsweise ein Fahrwerk angeordnet ist, das hier beispielhaft Räder 29 aufweist. Alternativ kann der Rahmen 28 auch auf einem Transportelement 112 angeordnet sein, um entlang einer Produktionslinie verfahren zu werden, oder der Fahrweg der Produktionslinie selber weist Rollen auf, auf denen die Schalungen 10 verfahrbar sind.

In einem Innenraum 30 der Basis 12 sind Basiselemente 31 und Aktuatoren 32, in Form von Hydraulikzylindern, vorgesehen, die mit dem Basiselement 31 fest verbunden sind. Ein Bewegungselement 33 des Aktuators 32, hier eine Kolbenstange, ist mit dem Verbindungselement 27 verbunden. Durch lineares Bewegen des Bewegungselementes 33 des Aktuators 32 wird das Verbindungselement 27 von einer Seitenwand 34 der Basis 12 in Doppelpfeilrichtung H bewegt. Gleichzeitig wird es um den Drehpunkt 38 gedreht, sodass die Seitenwand 14 vom Innenraum 17 bzw. Boden 16 wegbewegt wird, sodass die Schalung 10 in Bezug auf die Seitenwände 14 geöffnet wird.

Zum Öffnen der Stirnwände 15, die ebenfalls über ein Verbindungselement 27 mit einer Schwenkverbindung 26, die einen Drehpunkt 38 aufweist, mit der Basis 12 verbunden ist, ist wenigstens ein Aktuator 35, hier ein Hydraulikzylinder, vorgesehen. Dieser kann ähnlich zu dem zuvor beschriebenen Aktuator 32 in Verbindung mit dem Basiselement 31 im Innenraum 30 angeordnet sein. Alternativ ist der Aktuator 35 über eine Verbindung 36 an der Seitenwand 14 angeordnet. In der Verbindung 36 ist der Aktuator 35 um eine erste Achse 37 drehbar und gleichzeitig um eine zweite Achse 39 drehbar angeordnet, sodass der Aktuator 35, wenn die Stirnwand 15 geöffnet ist, zusammen mit der Seitenwand 14 beim Öffnen derselben verschwenkt werden kann.

Gleiches gilt auch für die Verbindung 40, mit der der Aktuator 35 mit der Stirnwand 15 verbunden ist. Der Aktuator 35 weist ein Bewegungselement 41 auf, hier eine Kolbenstange die aus dem Aktuator 35 in Doppelpfeilrichtung H heraus bewegt werden kann, um die Stirnwand 15 um den Drehpunkt 38 in der Schwenkverbindung 26 in Doppelpfeilrichtung I zu verschwenken. Eine Ecke 46 des Innenraums 17 wird durch das Berühren einer Außenseite 42 einer Stirnwand 15 mit einer Außenseite 43 einer Seitenwand 14 gebildet. Zusätzlich sind an der Außenseite 42 der Stirnwand 15 und dazu entsprechend passend an der Außenseite 43 der Seitenwand 14 ein männliches und ein weibliches Eingriffelement 44, 45 vorgesehen, die im geschlossenen Zustand der Schalung ineinandergreifen. Hier ist bevorzugt das männliche Eingriffelement 45 an der Stirnwand 15 und das weibliche Eingriffelement 44 an der Seitenwand 14 angeordnet, sodass das männliche Eingriffelement 45 ein Bewegen der Seitenwand 14 im geschlossenen Zustand der Stirnwand 15 verhindert. Durch Anziehen und Halten des Bewegungselements 41 des Aktivators 35 wird die Stirnwand 15 an ihrem äußeren Ende 42 auf die Seitenwand 14 an ihrem äußeren Ende 43 angepresst. Gleichzeitig greift das männliche Eingriffelement 45 in das weibliche Eingriffelement 44 und sperrt dadurch zusätzlich zum Anziehen und Halten des Bewegungselements 33 des Aktuators 32, sodass die Seitenwand 14 nicht vom Boden 16 gelöst werden kann, solange die Stirnwand 15 am Boden 16 anliegt. Durch das Anziehen und Halten des Bewegungselements 41 des Aktivators 35 am äußeren Ende 42 wird gleichzeitig bevorzugt in Verbindung mit den Eingriffelementen 44, 45, ein Öffnen der Ecken 46, gebildet zwischen den Seitenwänden 14 und den Stirnwänden 15, effektiv und einfach vermieden.

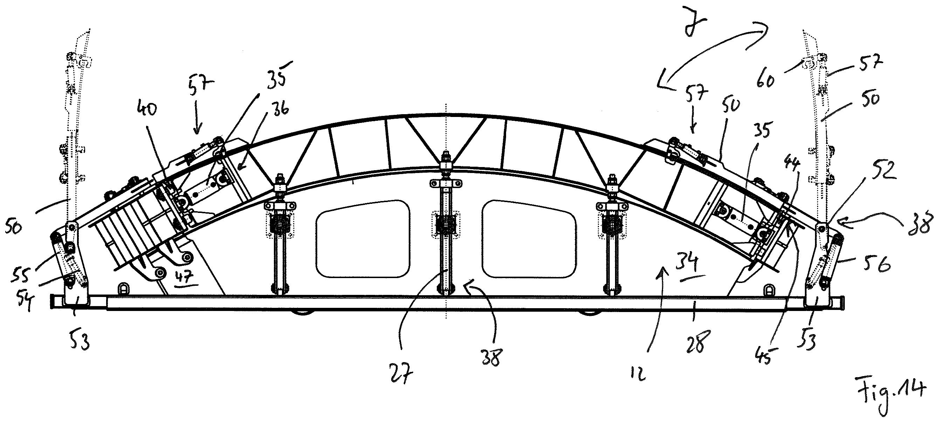

Ein Ablösen der Seitenwände 14 und der Stirnwände 15 vom Boden 16 beispielsweise durch Lastverformung durch den eingebrachten Beton wird durch das Verteilen der Schwenkverbindungen 13, 26 entlang der Seitenwände 34, 47 der Basis 12 verhindert. Weiterhin weist die Schalung 10 zwei Deckel 50 auf, die an der Basis 12 angebracht sind und während des Herstellungsprozesses des Betontübbings 500 entweder geschlossen, wie in Figur 11 dargestellt, oder geöffnet, wie in Figur 13 und 14 dargestellt, sind.

Die Deckel 50 werden in Doppelpfeilrichtung J zwischen der geschlossenen Position auf dem Innenraum 17 und der geöffneten Position verschwenkt. Sie dienen dazu, die Schalung 10 bzw. deren Innenraum 17 nach oben zu schließen, wenn der Beton in den Innenraum 17 eingefüllt wird. Bei der Tübbingherstellung sind Schalungen 10 bekannt mit Teildeckeln, wie die Deckel 50 in der zweiten Ausführungsform der erfindungsgemäßen Schalung 10 hier gezeigt sind, oder auch ohne Deckel 50, wie dieses in der ersten nicht beanspruchten Ausführungsform beispielhaft der Fall ist. Die nicht überdeckten Bereiche werden vor dem Befüllen der Schalung 10 mit Beton mit einem Deckel geschlossen, wobei noch offene Bereiche vorhanden sind, durch die dann der Beton in den Innenraum 17 eingefüllt wird. Das Anbringen dieser zusätzlichen Deckel erfolgt vor oder in der Betonierarbeitstation.

Sind wie hier im zweiten Ausführungsbeispiel Deckel 50 an der Schalung 10 vorgesehen, die zwischen einer geöffneten und einer geschlossenen Position bewegt werden, so werden diese in oder vor der Betonierarbeitstation geschlossen. Nach dem Betonieren werden die Deckel entweder entfernt (nach der ersten nicht beanspruchten Ausführungsform) oder wieder geöffnet, um die Oberfläche 520 des rohen Betontübbings in einer entsprechenden weitern Arbeitsstation/in einem weiteren Arbeitsschritt zu bearbeiten. Nach Abschluss dieses Arbeitsschritts werden die Deckel 50 wieder geschlossen. Anschließend werden die Schalungen 10 mit geschlossenen Deckeln 50 der Härtestation zugeführt. Innerhalb der Härtestation bleiben die Deckel 50 dann entsprechend geschlossen. Nachdem die Härtung abgeschlossen ist, werden die Deckel 50 geöffnet. Anschließend werden auch die Seitenwände 14 und die Stirnwände 15 in notwendiger Reihenfolge geöffnet. Hiernach ist der vorgehärtete Betontübbing 500 entnehmbar.

Nach der Entnahme des Betontübbings 500 wird die Schalung 10 entsprechend gereinigt und für die Herstellung eines neuen Betontübbings 500 vorbereitet, wie zuvor beschrieben. Je nach Möglichkeiten des Transports werden die Seitenwände 14, Stirnwände 15 und Deckel 50 entweder geschlossen oder bleiben im geöffneten Zustand. In der Reinigungsstation müssen dann die Deckel 50, Stirnwände 15 und Seitenwände 14 ggf. wieder geöffnet werden, damit eine vollständige Reinigung vollzogen werden kann. Im Anschluss an die Reinigung werden dann die Seitenwände 14 und die Stirnwände 15 geschlossen. Der Innenraum 17 wird dann mit entsprechender Bewehrung und Einbauteilen bestückt. Ist dieses abgeschlossen, wird anschließend wie zuvor beschrieben die Schalung 10 auf das Betonieren vorbereitet. Die Deckel 50 sind mit Verbindungselementen 51 versehen, die über eine Schwenkverbindung 52 mit der Basis 12 verbunden sind. Die Schwenkverbindung 52 ist dabei an einem Vorsprungelement 53 drehbar angeordnet. Vorgesehen ist ein Aktuator 54, der parallel zum Vorsprungelement 53 mit der Basis 12 verbunden ist. Das Verbindungselement 51 erstreckt sich über die Schwenkverbindung 52 hinaus. An diesem Teil des Verbindungselement 51 greift dann das Bewegungselement 55 des Aktuators 54 an. Durch Ein- und Ausfahrt des Bewegungselements 55 wird der Deckel 50 in Doppelpfeilrichtung J um den in der Schwenkverbindung 52 befindlichen Drehpunkt 38 verschwenkt. Um ein besseres Öffnen und Schließen bzw. Durchführen der Schwenkbewegung in Pfeilrichtung J zu gewährleisten, sind Federelemente 56 zur Unterstützung vorgesehen.

Bei dem Aktuator 54 handelt es sich um einen Hydraulikzylinder. Das Bewegungselement 55 stellt dabei die Kolbenstange des Hydraulikzylinders dar. Der Aktuator 54 bewirkt neben dem Öffnen und Schließen auch das Halten des Deckels 50 in der jeweiligen Position.

Zusätzlich sind zur Sicherung am Deckel 50 Sicherungselemente 57 vorgesehen, die mit einem Aktuator 58 versehen sind, der ein Bewegungselement 59 aufweist. Das Bewegungselement 59 ist verbunden mit einem Sperrelement 60, dass über das Ein- und Ausfahren des Bewegungselements 59 zwischen einer Verriegelungspositionen einer freien Position bewegbar ist, hier bevorzugt verschwenkbar. An den Seitenwänden 14 bzw. Stirnwänden 15 sind zum Verriegeln Eingrifföffnungen 61 vorgesehen, in die das Sperrelement 60 zum Verriegeln eingreift. Das Verriegeln erfolgt beispielsweise während des Härtens.

Zur Steuerung der Aktuatoren der Schalung 10, wenn diese als Hydraulikzylinder ausgeführt sind, sind diese Teil eines Hydraulikkreislaufes. Die Aktoren werden nachfolgend als Hydraulikzylinder bezeichnet. Hierbei sind die Hydraulikzylinder 32 zum Öffnen und Schließen der Seitenwände und die Hydraulikzylinder 35 zum Öffnen und Schließen der Stirnwände so vorgesehen, dass die Wände schließen, wenn der Hydraulikzylinder einfährt. Die Hydraulikzylinder 54 des Deckels 50 und die Hydraulikzylinder 58 zum Betätigen der Sperrelemente 60 sind dabei so angeordnet, dass der Deckel 50 und das Sperrelement 60 schließen, wenn der Hydraulikzylinder einfährt.

An den jeweiligen Arbeitsstationen, an denen die Hydraulikzylinder betätigt werden müssen, wird über einen Anschluss der Hydraulikkreislauf an ein nicht dargestelltes Hydraulikaggregat angeschlossen. Das Aufbringen der haltenden Kraft der Hydraulikzylinder nach dem Verschließen der Seitenwände 14 und Stirnwände 15 sowie nach dem Verschließen der Deckel 50 und der Sperrelemente 60 muss nach Abkoppeln des Hydraulikkreislauf der Schalung 10 vom Antriebsaggregat bestehen bleiben.

Das Halten der notwendigen Verschlusskräfte erfolgt durch in den Hydraulikkreislauf eingebrachte Lasthalteventile (nicht dargestellt). Die Lasthalteventile bewirken, dass die in den Hydraulikzylinder eingebrachte Hydraulikflüssigkeit nicht aus diesem wieder zurückfließen kann, nachdem das Hydraulikaggregat den Hydraulikkreislauf nicht mehr mit Hydraulikflüssigkeit beaufschlagt, wodurch der Druck auf die Kolbenfläche des Hydraulikzylinders konstant bleibt.

Um Druckschwankungen/Volumenänderungen im Hydraulikkreislauf beispielsweise aufgrund von Temperaturänderungen in der Härteanlage entgegenzuwirken, sind an entsprechenden Stellen im Hydraulikkreislauf Ausgleichelemente vorgesehen. Hierbei kann es sich beispielsweise um Membranspeicher oder Blindzylinder handeln.

Welche Zylinder zuerst mit Hydraulikflüssigkeit beaufschlagt werden, ergibt dabei die notwendige Steuerungsreihenfolge. Zwischen den einzelnen Zylindern können zur Abfolge der Steuerung der einzelnen Bewegungen schaltbare Sperrelemente vorgesehen sein. Bevorzugt handelt es sich hierbei um Druckfolgeventile.

## Patentansprüche

1. Schalung (10) zur Herstellung eines Betontübbings (500) eines Tunnelausbausystems, mit einer Betonwanne zur Aufnahme einer zur Herstellung des Tübbings notwendigen Betonmenge und falls erforderlich zur Aufnahme der vorgesehenen Bewehrung des Betontübbings (500), wobei die Betonwanne wenigstens einen Boden (16) und an dem Boden (16) der Form nach angepassten Wände (14, 15) aufweist, wobei wenigstens ein Wand (14, 15) von dem Boden (16) lösbar und gegenüber dem Boden zwischen einer geschlossenen Position und einer geöffneten Position verschwenkbar angeordnet ist, wobei die Schalung (10) wenigstens ein Antriebssystem zum Verschwenken der wenigstens einen Wand (14, 15) zwischen der offenen und der geschlossenen Position und zum Halten in der jeweiligen Position aufweist, und dass das Antriebssystem wenigstens einen ersten Aktuator (32, 35) für das Verschwenken der wenigstens einen Wand (14, 15) zwischen der offenen und der geschlossenen Position aufweist, wobei es sich bei dem Antriebssystem um ein Hydrauliksystem mit wenigstens einem Hydraulikkreislauf handelt, wobei das Antriebssystem wenigstens einen Hydraulikzylinder als wenigstens einen ersten Aktuator (32, 35) aufweist, der mit dem Hydraulikkreislauf verbunden ist, **dadurch gekennzeichnet, dass** an der Schalung (10) schwenkbar wenigstens ein Deckelelement (50) vorgesehen ist, das auf der Oberseite der Betonwanne anordbar ist und auf dieser die Oberseite wenigstens teilweise überdeckt, dass das Deckelelement (50) zwischen einer offenen und einer geschlossenen Position mit wenigstens einem zweiten Aktuator (54) verschwenkbar ist, und dass es sich bei dem wenigstens einen zweiten Aktuator (54) um eine Hydraulikzylinder handelt.

2. Schalung nach Anspruch 1, **dadurch gekennzeichnet, dass** der wenigstens eine zweite Aktuator (54) das Deckelement (50) in der geöffneten oder geschlossenen Position hält.

3. Schalung nach Anspruch 1 oder 2, **dadurch gekennzeichnet, dass** das Deckelelement (50) ein Arretierungselement (57) aufweist, das das Deckelelement in geschlossener Position gegenüber der Schalung (10) arretiert.

4. Schalung nach Anspruch 3, **dadurch gekennzeichnet, dass** das Arretierungselement (57) zwischen einer offenen und einer geschlossenen Position mit wenigstens einem dritten Aktuator (58) verschwenkbar ist.

5. Schalung nach Anspruch 4, **dadurch gekennzeichnet, dass** es sich bei dem wenigstens einen dritten Aktuator (58) um einen Hydraulikzylinder handelt.

6. Schalung nach einem der Ansprüche 1 bis 5, **dadurch gekennzeichnet, dass** sich wenigstens zwei Wände (14, 15) an einem ihrer beiden äußeren Endbereiche mit ihren kurzen Seiten in geschlossener Position berühren und dabei eine Ecke (46) der Betonwanne ausformen.

7. Schalung nach einem der Ansprüche 1 bis 6, **dadurch gekennzeichnet, dass** die wenigstens eine Wand (14, 15) zum Bewegen zwischen der offenen und der geschlossenen Position mit wenigstens zwei ersten Aktuatoren (32, 35) des Antriebssystems verbunden ist.

8. Schalung nach einem der Ansprüche 1 bis 7, **dadurch gekennzeichnet, dass** das wenigstens eine Wandelement (14, 15) zwei äußere Endbereiche aufweist und dass pro Endbereich zum Bewegen und Halten des Wandelements (14, 15) wenigstens ein erster Aktuator (32, 35) vorgesehen ist.

9. Schalung nach einem der Ansprüche 1 bis 8, **dadurch gekennzeichnet, dass** der Hydraulikkreislauf ein Sperrelement zum Halten des Drucks im Hydraulikkreislauf aufweist.

10. Schalung nach Anspruch 9, **dadurch gekennzeichnet, dass** es sich bei dem Sperrelement um ein Lastaufnahmeventil handelt.

11. Schalung nach einem der Ansprüche 1 bis 10, **dadurch gekennzeichnet, dass** der Hydraulikkreislauf ein Element zum Ausgleich einer Druckänderung und/oder einer Volumenänderung im Hydraulikkreislauf aufweist, wobei es sich bevorzugt um einen Blindzylinder oder um einen Membranspeicher handelt.

12. Schalung nach einem der Ansprüche 1 bis 11, **dadurch gekennzeichnet, dass** der Hydraulikkreislauf wenigstens ein Anschlusselement zum lösbaren Anschließen des Hydraulikkreislaufs an ein Hydraulikaggregat als externen Antrieb des Antriebssystems an einer Arbeitsstation aufweist.

## Claims

1. Formwork (10) for producing concrete tubbing (500) for a tunnel lining system, having a concrete tray for receiving a quantity of concrete required for producing the tubbing and, if required, for receiving the envisaged reinforcement of the concrete tubbing (500), wherein the concrete tray has at least one base (16) and on the base (16) walls (14, 15) adapted to the shape, wherein at least one wall (14, 15) is disposed so as to be releasable from the base (16) and pivotable between a closed position and an opened position in relation to the base, wherein the formwork (10) has at least one drive system for pivoting the at least one wall (14, 15) between the open position and the closed position and for retaining said wall (14, 15) in the respective position, and wherein the drive system has at least one first actuator (32, 35) for pivoting the at least one wall (14, 15) between the open position and the closed position, wherein the drive system is a hydraulic system having at least one hydraulic circuit, wherein the drive system has, as at least one first actuator (32, 35), at least one hydraulic cylinder which is connected to the hydraulic circuit, **characterized in that** at least one cover element (50) is provided so as to be pivotable on the formwork (10), said cover element (50) being able to be disposed on the upper side of the concrete tray and on the latter at least partially covering the upper side, **in that** the cover element (50) is pivotable between an open position and a closed position by at least one second actuator (54), and **in that** the at least one second actuator (54) is a hydraulic cylinder.

2. Formwork according to Claim 1, **characterized in that** the at least one second actuator (54) holds the cover element (50) in the opened position or the closed position.

3. Formwork according to Claim 1 or 2, **characterized in that** the cover element (50) has an arrester element (57) which arrests the cover element in the closed position in relation to the formwork (10).

4. Formwork according to Claim 3, **characterized in that** the arrester element (57) is pivotable between an open position and a closed position by at least one third actuator (58).

5. Formwork according to Claim 4, **characterized in that** the at least one third actuator (58) is a hydraulic cylinder.

6. Formwork according to one of Claims 1 to 5, **characterized in that** in the closed position at least two walls (14, 15) at one of the two external end regions thereof contact one another by way of the short sides of said walls (14, 15) and here form a corner (46) of the concrete tray.

7. Formwork according to one of Claims 1 to 6, **characterized in that** the at least one wall (14, 15) for moving between the open position and the closed position is connected to at least two first actuators (32, 35) of the drive system.

8. Formwork according to one of Claims 1 to 7, **characterized in that** the at least one wall element (14, 15) has two external end regions, and **in that** at least one first actuator (32, 35) for moving and retaining the wall element (14, 15) is provided per end region.

9. Formwork according to one of Claims 1 to 8, **characterized in that** the hydraulic circuit has a blocking element for maintaining the pressure in the hydraulic circuit.

10. Formwork according to Claim 9, **characterized in that** the blocking element is a load-bearing valve.

11. Formwork according to one of Claims 1 to 10, **characterized in that** the hydraulic circuit has an element for equalizing a variation in terms of pressure and/or a variation in terms of volume in the hydraulic circuit, wherein said element is preferably a dummy cylinder or a diaphragm accumulator.

12. Formwork according to one of Claims 1 to 11, **characterized in that** the hydraulic circuit has at least one connector element for releasably connecting the hydraulic circuit to a hydraulic apparatus as the external drive of the drive system at a workstation.

## Revendications

1. Coffrage (10) pour la fabrication d'un cuvelage en béton (500) d'un système de soutènement de tunnel, avec un bac à béton pour recevoir une quantité de béton nécessaire à la fabrication du cuvelage et, si nécessaire, pour recevoir l'armature prévue du cuvelage en béton (500), le bac à béton présentant au moins un fond (16) et des parois (14, 15) adaptées à la forme du fond (16), au moins une paroi (14, 15) étant agencée de manière détachable du fond (16) et de manière à pouvoir pivoter par rapport au fond entre une position fermée et une position ouverte, le coffrage (10) présentant au moins un système d'entraînement pour faire pivoter l'au moins une paroi (14, 15) entre la position ouverte et la position fermée et pour la maintenir dans la position respective, et le système d'entraînement présentant au moins un premier actionneur (32, 35) pour faire pivoter l'au moins une paroi (14, 15) entre la position ouverte et la position fermée, le système d'entraînement consistant en un système hydraulique avec au moins un circuit hydraulique, le système d'entraînement présentant au moins un cylindre hydraulique en tant qu'au moins un premier actionneur (32, 35) relié au circuit hydraulique, **caractérisé en ce qu'**il est prévu sur le coffrage (10) de manière pivotante au moins un élément de couvercle (50) qui peut être agencé sur le côté supérieur du bac à béton et qui recouvre au moins partiellement le côté supérieur sur celui-ci, **en ce que** l'élément de couvercle (50) peut pivoter entre une position ouverte et une position fermée avec au moins un deuxième actionneur (54), et **en ce que** l'au moins un deuxième actionneur (54) consiste en un cylindre hydraulique.

2. Coffrage selon la revendication 1, **caractérisé en ce que** l'au moins un deuxième actionneur (54) maintient l'élément de couverte (50) dans la position ouverte ou fermée.

3. Coffrage selon la revendication 1 ou 2, **caractérisé en ce que** l'élément de couvercle (50) présente un élément de blocage (57) qui bloque l'élément de couvercle en position fermée par rapport au coffrage (10).

4. Coffrage selon la revendication 3, **caractérisé en ce que** l'élément de blocage (57) peut pivoter entre une position ouverte et une position fermée avec au moins un troisième actionneur (58).

5. Coffrage selon la revendication 4, **caractérisé en ce que** l'au moins un troisième actionneur (58) consiste en un cylindre hydraulique.

6. Coffrage selon l'une quelconque des revendications 1 à 5, **caractérisé en ce qu'**au moins deux parois (14, 15) se touchent par leurs petits côtés en position fermée à l'une de leurs deux zones d'extrémité extérieures et forment ainsi un coin (46) du bac à béton.

7. Coffrage selon l'une quelconque des revendications 1 à 6, **caractérisé en ce que** l'au moins une paroi (14, 15) est reliée à au moins deux premiers actionneurs (32, 35) du système d'entraînement pour se déplacer entre la position ouverte et la position fermée.

8. Coffrage selon l'une quelconque des revendications 1 à 7, **caractérisé en ce que** l'au moins un élément de paroi (14, 15) présente deux zones d'extrémité extérieures et **en ce qu'**il est prévu au moins un premier actionneur (32, 35) par zone d'extrémité pour déplacer et maintenir l'élément de paroi (14, 15).

9. Coffrage selon l'une quelconque des revendications 1 à 8, **caractérisé en ce que** le circuit hydraulique présente un élément de blocage pour maintenir la pression dans le circuit hydraulique.

10. Coffrage selon la revendication 9, **caractérisé en ce que** l'élément de blocage consiste en une vanne d'absorption de charge.

11. Coffrage selon l'une quelconque des revendications 1 à 10, **caractérisé en ce que** le circuit hydraulique présente un élément de compensation d'une variation de pression et/ou d'une variation de volume dans le circuit hydraulique, celui-ci consistant de préférence en un cylindre aveugle ou un accumulateur à membrane.

12. Coffrage selon l'une quelconque des revendications 1 à 11, **caractérisé en ce que** le circuit hydraulique présente au moins un élément de raccordement pour raccorder de manière détachable le circuit hydraulique à un groupe hydraulique en tant qu'entraînement externe du système d'entraînement à un poste de travail.
